# EUROPEAN PATENT SPECIFICATION

(11) **EP 1 716 510 B1**
(45) Date of publication and mention of the grant of the patent: **28.09.2011**
(21) Application number: 05702440.8
(22) Date of filing: 07.02.2005
(51) Int. Cl.: G06F 17/30

(54) **REPRESENTATION OF MEDIA ITEMS IN A MEDIA FILE MANAGEMENT APPLICATION FOR USE WITH A DIGITAL DEVICE**
DARSTELLUNG VON MEDIA-POSTEN IN EINER MEDIA-DATEIVERWALTUNGSANWENDUNG ZUR VERWENDUNG MIT EINER DIGITALEN EINRICHTUNG
REPRESENTATION D'ARTICLES MULTIMEDIA DANS UNE APPLICATION DE GESTION DE FICHIERS MULTIMEDIA UTILISEE AVEC UN DISPOSITIF NUMERIQUE

(30) Priority: 09.02.2004 US 774670
(43) Date of publication of application: 02.11.2006
(73) Proprietor: Nokia Corporation, 02150 Espoo (FI)
(72) Inventor: FINKE-ANLAUFF, Andrea, 38104 Braunschweig (DE); MACKE, Annika, 38104 Braunschweig (DE); SCHULTEN, Daniela, 38106 Braunschweig (DE); LINDHOLM, Christian, FIN-00150 Helsinki (FI); KOSKELA, Sami, FIN-00560 Helsinki (FI); ARTMAN, Tuomas, FIN-00170 Helsinki (FI)
(74) Representative: Read, Matthew Charles
(86) International application number: PCT/IB2005/000297
(87) International publication number: WO 2005/076156

(56) References cited:
- EP-A1- 1 051 034
- WO-A1-99/37075
- WO-A2-02/057959
- WO-A2-03/003343
- US-A1- 2003 009 493
- BEDERSON B: "Fisheye Menus", PROCEEDINGS OF THE 13TH ANNUAL ACM SYMPOSIUM ON USER INTERFACE SOFTWARE AND TECHNOLOGY, 2000, pages 217-225, San Diego, California, United States DOI: http://doi.acm.org/10.1145/354401.354782 ISBN: 1-58113-212-3
- LEUNG Y K ET AL: "A review and taxonomy of distortion-oriented presentation techniques", ACM TRANSACTIONS ON COMPUTER-HUMAN INTERACTION, ACM, NEW YORK, NY, US, vol. 1, no. 2, 1 June 1994 (1994-06-01), pages 126-160, XP002252314, ISSN: 1073-0516, DOI: DOI:10.1145/180171.180173
- MACKINLAY J D ET AL: "THE PERSPECTIVE WALL: DETAIL AND CONTEXT SMOOTHLY INTEGRATED", HUMAN FACTORS IN COMPUTING SYSTEMS. REACHING THROUGH TECHNOLOGYCHI. CONFERENCE PROCEEDINGS, XX, XX, 27 April 1991 (1991-04-27), pages 173-179, XP008001165,
- SILVA S F ET AL: "Visualization of linear time-oriented data: a survey", WEB INFORMATION SYSTEMS ENGINEERING, 2000. PROCEEDINGS OF THE FIRST IN TERNATIONAL CONFERENCE ON HONG KONG, CHINA 19-21 JUNE 2000, LOS ALAMITOS, CA, USA,IEEE COMPUT. SOC, US, vol. 1, 19 June 2000 (2000-06-19), pages 310-319, XP010521869, DOI: DOI:10.1109/WISE.2000.882407 ISBN: 978-0-7695-0577-0

## Description

### FIELD OF THE INVENTION

The present invention relates to media file management and, more specifically, to applications, methods and devices for representing media items in a media file management application implemented in digital devices.

### BACKGROUND OF THE INVENTION

The rapid growth of digital communication has made it possible for all kinds of digital media items to be communicated amongst various types of wireless and wire line communication devices. For instance, the cellular or mobile telephone is no longer limited to telephonic voice communication and may include other means of digital communication, such as digital networking (i.e., Internet communication, text messaging, and the like). In addition, an increasing number of cellular telephones and other mobile wireless communication devices, such as portable computers, personal data assistants (PDAs) and the like, are being integrated with other means of capturing or producing digital media, such as digital cameras, digital audio recorders, digital video recorders and the like. Technological advances have made it possible for other digital devices, such as digital cameras, digital video recorders, digital audio devices and the like to be equipped with means for digital communication. As more and more digital devices possess the capability to digitally communicate with one another, the amount of digital media items that will be communicated amongst these devices will increase at an alarming rate.

In addition to the onset of more and more digital devices possessing digital communication capabilities, the digital storage capacity of these devices is constantly increasing. In the near future the majority of mobile digital communication terminals may well be equipped with storage capacity in the gigabyte range or greater, allowing these devices to store an enormous amount of digital data. In this environment it will no longer be prohibitive from a memory capacity standpoint to store a voluminous amount of large file types, such as video, audio or other multimedia files.

In the digital communication environment where more and more digital devices, both wireless and wired, are equipped with a means for digital communication and where the storage capacity of these devices has become seemingly endless, the digital communication device will encounter and store innumerable digital media files. As such, the digital communication device will desire a means to access, store, manage and further communicate these digital files in an efficient and user-friendly environment.

For example, if a digital communication device receives a digital media file the user of the device would benefit greatly from an application that automatically places the file into a readily accessible storage area and where managing and accessing of the file in the future can occur efficiently, without the user having to spend a great deal of time searching for the media file.

Most digital media files can be easily categorized and stored according to a time period, time frame or an event. For example, a wedding video can be categorized according to the date of the wedding and photographs taken at a party can be categorized according to the date of the party. These are examples of categorizing the media file based on the creation date of the media file. In other instances the media file can be associated with the date on which the media file is used or presented or the date on which the recipient receives the file. For example, a multimedia presentation for a business meeting may be categorized according to the date of the presentation and a personal text file from a friend may be categorized according to the date received.

Therefore, the need exists to develop a media file management application for a digital communication device that will display media files and organize media files in a manner that provides exceptional user-experience. Such a management application will heighten the user-experience if it is adaptable to use in conjunction with mobile devices that typically have small displays. In addition, the desired media file management application should provide a user ease in accessing portions of media files or accessing information, such as metadata, that is associated with the media files.

The Perspective Wall: Detail and Context Smoothly Integrated, Mackinlay et al., 1991, discloses a perspective wall view for displaying items that represent files in a computer system. The files are structured by modification date and arranged horizontally over three panels of the wall. The panels include a central panel for viewing details and a perspective panel on either side of the central panel for viewing context. The wall can be scrolled and the items on the central panel are larger in size than the items on the perspective panels.

A Review and Taxonomy of Distortion-Oriented Presentation Techniques, Leung et al., Transaction on Computer-Human Interaction, Vol. 1, No. 2, June 1994, Pages 126-160, discloses fish-eye views and perspective wall views for presenting large volumes of data in a small window.

### BRIEF SUMMARY OF THE INVENTION

The invention is defined by the claims. Embodiments of the present invention provides for a media diary application implemented in a digital communication device. The media diary application provides the user with various ways to display media file representations, so that a user can easily locate a media file or view the contents of a media file. By providing for alternative means for displaying media file representations, the media diary application of the present invention is highly adaptable to mobile devices that typically have condensed displays that limit the amount of viewable area.

In one embodiment of the invention, an application for representing media files on a digital device is defined. The application comprises a computer readable storage medium having computer-readable program instructions embodied in the medium.

The computer-readable program instructions includes first instructions for generating a media view that provides access to digital media files and associates digital media files with a moment or period of time or an event and second instructions for generating media file representations within the media view such that the media file representations associated with a period of time proximate to a predefined position within the media view are enlarged media file representations. In one embodiment, the second instructions define the predefined position within the media view as a vertical centerline position within the media view. The second instructions may additionally provide for generating media file representations within the media view such that media file representations gradually decrease in size the further that the period of time deviates from the vertical centerline. In addition, the second instructions may provide for generating media file representations within the media view such that the media file representation associated with a time period proximate to the predefined position and proximate to a point within the predefined position is an enlarged representation compared to other representations with the position. In one embodiment, the second instructions define the predefined position within the media view as a vertical centerline position and the point within the position as the center point.

The application may additionally include third instructions for displaying a selected media file representation from the media view in an enlarged size format and the enlarged format may exceed the size of all other media file representations within the media view. In certain embodiments the selected media file representation may be limited to the representations displayed in the period of time proximate to the vertical centerline.

The invention is also defined by an alternate application for representing media files on a digital device. The application comprises a computer readable storage medium having computer-readable program instructions embodied in the medium. The computer-readable program instructions includes first instructions for generating a media view that provides access to digital media files through media file representations and second instructions for generating an attribute icon that is superimposed on the media file representation. The first instructions may additionally provide for associating the media file representations with a period of time. The second instructions may additionally provide for the attribute icons to represent metadata information associated with the media file that is represented. The metadata information represented by the icons may include, but is not limited to, the type of media file, communication status of the media file, content of the media file, timestamp of the media file and access status of the media file.

Additionally, the invention is defined by yet another application for representing media files on a digital device. The application comprises a computer readable storage medium having computer-readable program instructions embodied in the medium. The computer-readable program instructions includes first instructions for generating a media view that provides access to digital media files through media file representations and associates the media file representations with a period of time and second instructions for selecting a media file representation for display of a detailed view of the media file associated with the media file representation. The detailed view provided by the second instructions may be a zoomed-in portion of the media file representation that is zoomed-in from a center point of the representation or zoomed-in from a point chosen by a user. Additionally, the detailed view provided by the second instructions may be a zoomed-out portion of the media file representation that that is zoomed-out from a center point of the representation or zoomed-out from a point chosen by a user.

The invention is additionally embodied in various methods for digital media management in a digital device. One method includes the steps of receiving a digital media file having metadata associated with the digital media file, transmitting the file to a media diary application that associates the digital media file with a period in time based on the metadata, and providing a user access to the digital media file via a media view that displays a media file representation of the digital media file in connection with the period of time, wherein the media file representation is sized according to the proximity of the period of time associated the media file to a predefined position, such as a vertical centerline position, in the media view. The method may additionally include providing for a media file representation that is enlarged if the media file is associated with a period of time that is proximate to the predefined position of the media view and may provide for decreasing the size of the media file representation as the period of time associated with the media file deviates from the predefined position of the media view.

A further method for digital media management in a digital device includes the steps of receiving a digital media file having metadata associated with the digital media file, transmitting the file to a media diary application and providing a user access to the digital media file via a media view that displays a media file representation of the digital media file with an attribute icon superimposed on the media file representation. The invention includes a further method for defining media file representation in a media view of a media diary application. The method includes the steps of receiving a digital media file having metadata associated with the digital media file, transmitting the file to a media diary application that associates the digital media file with a period in time based on the metadata, and providing a user access to the digital media file via a media view that displays a media file representation of the digital media file in connection with the period of time, wherein the media file representation is selectable to provide for a display of a detailed view of the media file representation.

A further embodiment of the invention is defined by a digital device having a processing unit that executes computer-readable program instructions for accessing media files. The computer-readable program instructions include first instructions for generating a media view that provides access to digital media files and associates digital media files with a moment or period of time or an event and second instructions for generating media file representations within the media view such that the media file representations associated with a period of time proximate to a predefined position of the media view are the enlarged media file representations. Additionally, the digital device will include a display in communication with the processing unit that presents the user access to media files through the media view. Alternatively the computer-readable program instructions may include first instructions for generating a media view that provides access to digital media files through media file representations and second instructions for generating an attribute icon that is superimposed on the media file representation. Additionally, the computer-readable program instructions may include first instructions for generating a media view that provides access to digital media files through media file representations and associates the media file representations with a period of time and second instructions for selecting a media file representation for display of a detailed view of the media file associated with the media file representation.

Thus, the present invention provides a media file diary application for a digital communication device that will display media files and organize media files in a manner that provides exceptional user-experience. The present invention will heighten the user-experience by providing a media diary application that is highly adaptable to use in conjunction with mobile devices that typically have small displays. In addition, the media diary application of the present invention provides a user with ease in accessing portions of the media files or accessing information, such as metadata, that is associated with the media files.

### BRIEF DESCRIPTION OF THE DRAWINGS

Having thus described the invention in general terms, reference will now be made to the accompanying drawings, which are not necessarily drawn to scale, and wherein:
Figure 1 is a generic illustration of a media view or media window as displayed by the media diary application.
Figure 2 is an illustration of a media view incorporating a cylindrical view of media file representations, in accordance with an embodiment of the present invention.
Figure 3 is an illustration of a media view incorporating an enlarged pop-up view of a media file representation, in accordance with an embodiment of the present invention.
Figure 4 is an illustration of a media view incorporating a fish-eye view of media file representations, in accordance with an embodiment of the present invention.
Figure 5 is an illustration of a digital device having a display that defines sub-areas of a media view, in accordance with an embodiment of the present invention.
Figures 6A and 6B are illustrations of a media view implementing attribute icons superimposed on the media file representations, in accordance with an embodiment of the present invention.
Figures 7A and 7B are illustrations of a media view incorporating detailed views and specifically a zoomed-in detailed view, in accordance with an embodiment of the present invention.
Figure 8 is a block diagram of a digital device executing a media diary application, in accordance with embodiments of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

The present invention provides for various methods for representing media items in a media file management application, such as a media diary application, a media file representation application, a calendar application, an electronic mail application, a messaging application or the like, which is implemented in an electronic device, such as a digital communication device. The media file management application will implement a digital media item organizer that organizes media items by timeframe and/or timeline. The media file management application provides for a media view that is displayed on the display of the associated digital communication device and includes representations of media items in association with a timeframe, a moment of time or an event. For the sake of combining terms under a generic heading the present invention defines the term "period of time" as including a timeframe, a moment of time or an event. As such, the media file management application may provide for a media view of media items associated with a past moment of time, such as year, month, week, day, hour, a specific time, or period of time. Alternatively, the media file management application provides for a media view of media items associated with any portion of the metadata information related to the media items.

In embodiments in which the file management application takes the form of a media diary application, the media diary may combine the benefit of an electronic calendar planner with a digital media item organizer. In embodiments that provide for an electronic calendar planner, the media diary application may provide for a calendar view of calendared events and reminders. Additionally, the media diary application may provide for a timeline view that is typically displayed in conjunction with the media view or a combined media view and calendar view. The timeline view provides for a timeline presentation (herein referred to as a time bar) of media items and, in certain embodiments, calendar events and reminders.

The media file management application of the present invention may be implemented and executed on any electronic device that incorporates a display, such as a desktop or portable computer, cellular telephone, personal data assistant (PDA), digital camera, digital camcorder, e-book device, television, digital audio player or the like. In addition the media file management application may be implemented on electronic devices that are connected to an external display, such as a set-top box (STB), personal video recorder (PVR), digital video recorder (DVR) or the like. While in most implementations the digital device that executes the media file management application will be capable of any type of wireless or wireline network communication, such as wireless telecom, short range radio network, Bluetooth®, Wireless Local Area Network (WLAN), Radio Frequency Identification (RFID), Internet Protocol Data Casting (IPDC), Digital Video Broadcasting (DVB), Infrared Data Association (IrDa), Internet or the like, it is not required that the digital device be adapted to communicate via network. Devices that are capable of acquiring digital media files internally or acquire media files through memory devices (e.g., flash storage device, memory sticks, video and audio storage tapes, CD, DVD, removable hard disc device (HDD) and the like) are also applicable.

In accordance with an embodiment of the present invention, the media file management application will be embodied by a computer-readable storage medium having computer-readable program instructions stored in the medium. The storage medium will typically be a memory device, such as flash ROM memory, HDD or the like. The programming instructions may be written in a standard computer programming language, such as C++, Java or the like. Upon execution by a processing unit as described below, the program instructions will implement the various functions of the media file management application as described below.

The media file management application of the present invention will typically be utilized in the following manner. Either the device on which the media file management application is executed will capture media files, such as a cellular telephone equipped with a digital camera or the device on which the media file management application is implemented will receive media files via digital communication. For example:
1) If the digital device is a cellular telephone that incorporates a digital camera or any other digital device that serves as a digital recording device, a digital media file (i.e., image) may be communicated directly via cellular telephone access from the camera/telephone device to the media diary in another device.
2) If the digital device is an independent digital camera or any other digital recording/storing/playing device and equipped with a wireless or wireline network connection, the digital media file may be communicated directly from the networked device to a media file management application in another device.
3) If the digital device is an independent digital camera or any other digital recording/storing/playing device and equipped with short range digital communication means the digital media file may communicated first to a long range digital communication device (i.e. cellular telephone, a PDA, laptop or the like) that then passes the files to another device with a media file management application. Alternatively, in proximity, a file transfer may occur directly to another device with a media diary.
4) The media files may be communicated by a physical memory unit / device transferred from one device to another device.

As such, the digital recording/storing/playing device from which the media file is communicated (i.e., the passing device) may include, and implement, the media file management application or may not include the media file management application. If the passing device includes the media file management application, the media files may be processed for media file management purposes prior to communication to other devices.

The media file will typically have associated metadata, in the form of a timestamp, event name, file name, location information, people in the event or in the media file, objects in the media file, file type, file size, temperature, weather conditions, priority information or any other information. Additionally, the metadata may include information from any sensors installed in a media-capturing device, a media diary device or any external device in communication to the media capturing or the media diary device. The media file metadata may be automatically inputted by the digital recording device at the time of the creation of the media file or may be manually inputted, such as at the time of creation of the media file or receipt or transfer of the media file. In addition, it is possible for the metadata to previously exist in conjunction with a calendar event that is stored in the media file management application or another calendar-type application and to be associated with the digital media file at the moment the file is created, if the device creating the media file executes the media file management application or another calendar-type application.

Once the media file management application receives the media file, the media file metadata may be combined and/or correlated with calendar event metadata information. The calendar event metadata information may come from an internal calendar/planner within the media file management application or it may be imported from an external calendar/planner application. The combined and/or correlated metadata information is associated and stored with the media file in the media diary, such that, when a user accesses the media file via the media file representation in the media view the user will be presented with the combined metadata and calendar event information. Correlation of metadata information may occur if the comparison results in predetermined number of metadata fields in the media file metadata and the calendar event metadata being determined to be similar. Examples of correlated media file metadata and calendar event metadata include, event time in calendar event metadata and capture time of media file metadata and event name in calendar event metadata and event name in media file metadata.

Once the media file is captured or the media file is received by the device implementing the media file management application, the file will either automatically be transferred to the media file management application or the user may manually choose which files it desires to place in the media file management database. Transferring to the media file management application will result in a media file representation being created and displayed in the media view in relation to the associated time period, time frame or event. In accordance with an embodiment of the present invention, if the media file is a multimedia file, such as an MMS message or an email, that includes both text and media items, the media file management application may be configured to store the file in its entirety or it may be configured to parse the file into separate text and media portions, such that the application would display separate text and media representations in the media view. The ability to parse the media file may also pertain to files that include ring tones, background images, game applications, audio files, advertisements, business cards and the like.

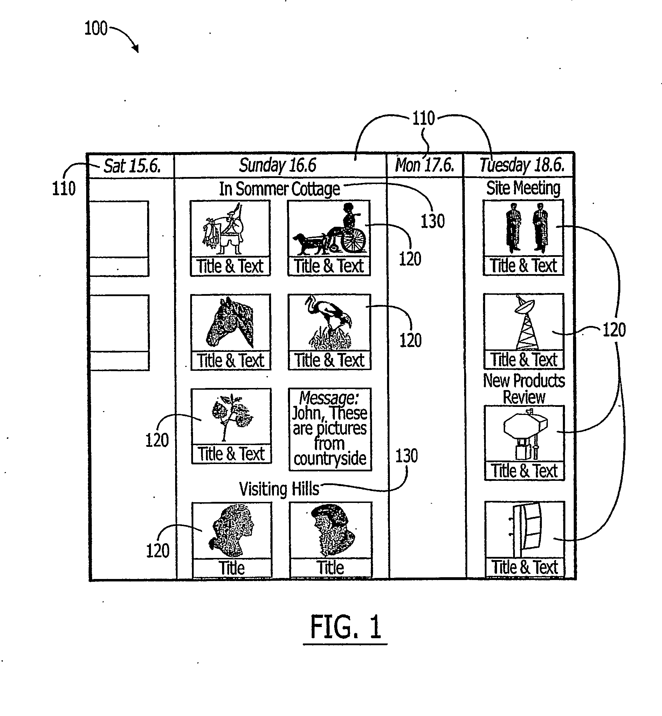

Figure 1 illustrates an example of a media view **100** displayed by a media file management application, such as a media diary application. The media view provides for digital media items, such as digital images, digital video, digital audio, computer games, computer software, digital text files or the like, to be accessible to the media diary user through media file representations (i.e., thumbnail images or condensed portions of media files). As such, the media view is typically displayed on a display of a device that implements the media diary application, such as a cellular telephone, PDA, digital camera or the like. The media view will be generated by computer-readable program instructions implemented in association with a digital device.

The media view depicted in Figure 1 is considered a generic media view, also referred to as a presentation view, the present invention provides for various alternative ways to represent media items in the media view. The alternative ways for representing media items will be discussed at length, infra.

The media diary application associates media files according to any metadata information, such as time period, time frame or event. Typically, the time stamp in the media file metadata will serve as the association link. In the Figure 1 view the media files have been associated with a specific date. As such, the media view of Figure 1 includes columns **110**, which correspond to a specific date. In the example shown, four date columns are visible on the display corresponding to the four previous dates. Alternatively, the media view may include columns **110**, which may correspond to any moment of time, such as a year, a month, a week, a day, an hour or the like. The date columns will include media file representations **120** that are related to media files and are connected, in time, to the specific date, event and/or time. For example, the media file representations may include representations that provide the user with access to digital files, such as video files, image files, audio files, text files, emails, short message service (SMS) messages, multimedia message service (MMS) messages and the like and provide the user with information pertaining to the content of the files. The media file representations may include an icon, or a thumbnail image, a portion of the text of a text document or message or any other suitable media file representation with or without the corresponding title of the media file. The media files will typically be stored in a memory unit that is either located within the device that implements the media file management application or is in communication with the device that implements the application. In instances in which the media files are stored within a memory unit located on the digital device implementing the application, the memory unit may be the same entity that stores the media file management operating instructions.

The form and style of the media file representations **120** may be by user's preference or the form style may be automatically determined by the media file management application. In addition, the presentation and categorization of media file representations may be by user's preference or automatically determined by the media file management application.

Additionally, media files forming or related to a specific joint group, e.g. based on a specific event, time period or any other metadata, may be placed in the media view in a joint group **130** under a common title or subject. The media files within the joint group may be bordered, shaded, colored or otherwise graphically indicated to designate the media files as being within the joint group. The title or subject may be manually inputted or may be inherited from metadata related to a calendar event or reminder, or, alternatively, from any metadata information related to the media file. The group may be created automatically by the media file management application or by the request of a user.

In media file management applications that combine a calendar/planner with a media diary or are in communication with an auxiliary calendar/planner application, the media view may also display past calendar events or reminders that do not have associated media files. In such embodiments, the media file management application may be configured to automatically import calendar events and reminders from the calendar portion of the application to the media diary portion of the application. In this regard, calendar events and reminders that are associated with a past period of time are displayed in the media view irrespective of their having associated media files. Alternately, the user of the media file may configure the media file management application to allow for specific calendar events and reminders, as chosen by the user, to be displayed in the media view.

The media file management application will typically incorporate a function that provides for ease in communicating a media file to another network communication device. For example, the application may include a send file function (not shown in Figure 1) that invokes an email application, SMS application, MMS application or other file transfer application. Media files are typically highlighted and added to the email, SMS or MMS as an attachment or otherwise communicated to the designated communication device.

In a typical media view, the width of the date columns **110** in the media view **100** may dynamically and/or automatically vary based upon the number of media file representations in the column, size of the media file representations or thumbnails or the user's preference for formatting the media file representations. For example, if a first date column incorporates three times the number of media file representations as the second date column, then the first date column will likely be three times as wide as the second date column, i.e., the widths of the columns may be allocated in proportion to the number of media file representations within the respective column. Alternatively, the user may dictate or fix the width of a date column or the size of the thumbnail images may dictate the width of the date columns. In addition, the media view may be incorporated with a function that provides for condensing the media view to only those dates that have media files associated therewith.

It should be noted that variance in column width in terms of the number of media files associated with a column (i.e., time period) will typically not apply if the media view incorporates the "cylindrical" or "fish-eye" views of the present invention. In the "cylindrical" or "fish view" the width of the column will typically be dictated by the position of the column within the view, typically the columns position relative to the vertical centerline position. In addition column width will typically not vary in terms of the number of media files associated with the column (time period) if the media file management application is executed on a mobile device with a small-sized display having limited viewing area. In such embodiments the display may be segmented into sub-areas for media file representation display and column width is dictated by the size of the display and/or the sub-areas. A more detailed discussion of "cylindrical" views, "fish-eye" views and display sub-areas is provided for below.

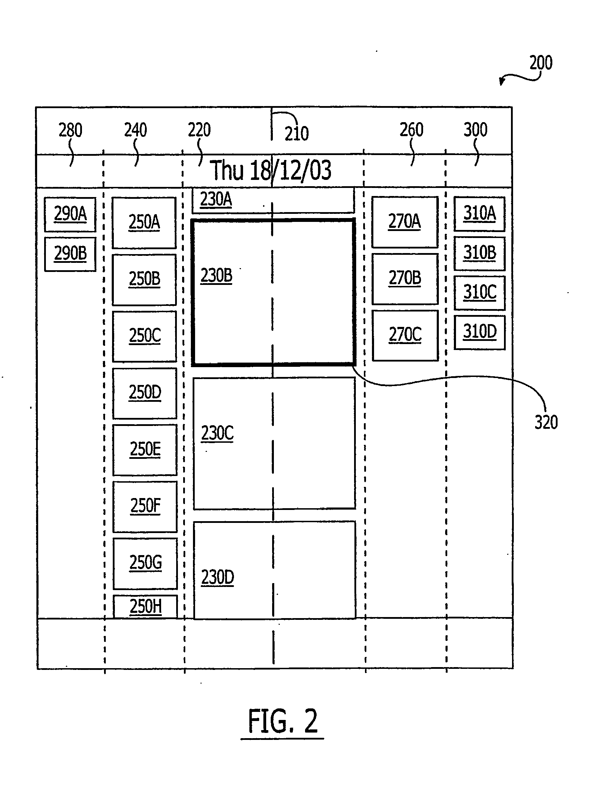

In accordance with an embodiment of the present invention, Figure 2 provides for a media view in which the media items are presented in a "cylindrical" media view. The "cylindrical" media view **200** provides for the size of the media file representation to be determined by the distance from the vertical centerline of the associated time period, time frame or event. The term "cylinder" view is used to refer to the media view as if the media file representations were affixed to the sides of a cylindrical container. In this hypothetical situation, if an individual were to encounter the cylindrical container, the media file representation in the center of the individual's view would appear largest while the size of the media file representations would appear to decrease the further the media file representations were from the center of the individual's view.

It is noted that while the Figure 2 illustrated embodiment determines size of the media file representation in terms of the distance from the vertical centerline of the associated time period, time frame or event (i.e., a column in Figure 2), it is also possible, and within the inventive concepts herein disclosed, to determine size of the media file representation in terms of the distance from any predefined position within the media view and to have other displayed media file representations vary in size according to the distance from the predefined position.

The "cylindrical" media view **200** may also provide for a time line **202** that is scrollable horizontally to allow for different time periods to be moved in and out of the display area. Hence, scrolling of the timeline will change the time periods in the display and change the size of the media file representations for the time periods being displayed. Scrolling may be accomplished by any user input, such as mouse cursor, joystick, left or right arrow keys, touch screen or the like. The "cylindrical" media view may also incorporate a time handle (not shown in Figure 2) that may be moved horizontally to scroll periods of time in the time line. Movement of the time handle may, likewise, be accomplished by any user input, such as mouse cursor, joystick, left or right arrow keys, touch screen or the like. The application may also be configured to provide for vertical scrolling of the media items, in addition to horizontal scrolling. Additionally, the application may also be configured to provide for a vertical implementation, whereby, the timeline is displayed vertically, scrolling within the timeline is conducted vertically and horizontal scrolling provides for the display of additional media file representations associated with the displayed time periods.

In the illustrated embodiment of Figure 2, the imaginary centerline **210** of the view corresponds with the column **220** that is associated with the date 18 December 2003. The "cylindrical" media view provides for the media file representations underlying this column to be sized larger than any other media file representations in the view. Thus, media file representations **230A - 230D** are the largest media file representations in the view. The media file representations will decrease in size the further the associated column is from the centerline position, thereby representing media files associated with the days prior to and subsequent to the selected date of 18 December 2003. In this regard, columns **240** and **260** provide for media file representations **250A - 250H** and **270A - 270C** that are reduced in size as compared to the media file representations **230A - 230D**. This concept is further illustrated, by columns **280** and **300** that are furthest from the centerline position and thus have corresponding media file representations **290A** - **290B** and **310A - 310D** that are the smallest media file representations in the view.

It should be noted that the "cylindrical" media view of Figure 2 is dynamic in nature, such that a user of the media dairy is able to scroll the view from left to right or right to left to bring a requisite column into the centerline position. Thus, if the user of the media diary application scrolls the view to the right, column **240** would assume the centerline position and the underlying media file representations would be the largest in size within the view. In this example, column **220** would move from the centerline position to a position adjacent to the center column **240** and the underlying media file representations would be smaller in size that those depicted under column **240**.

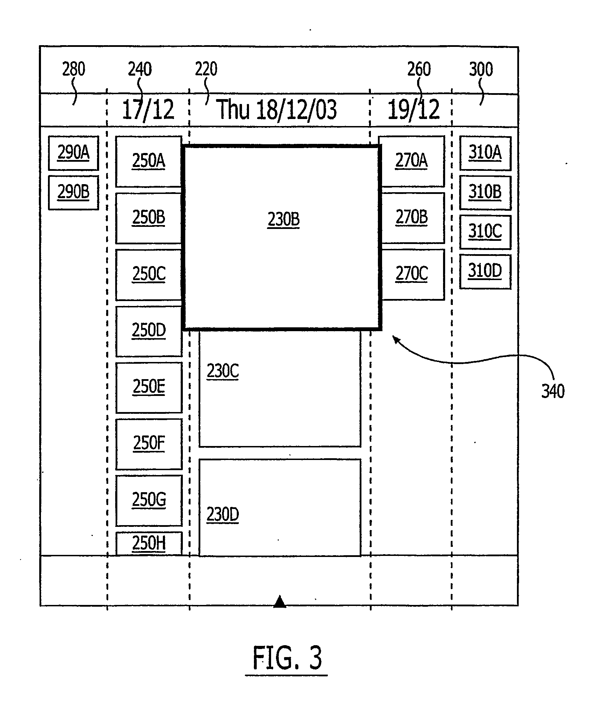

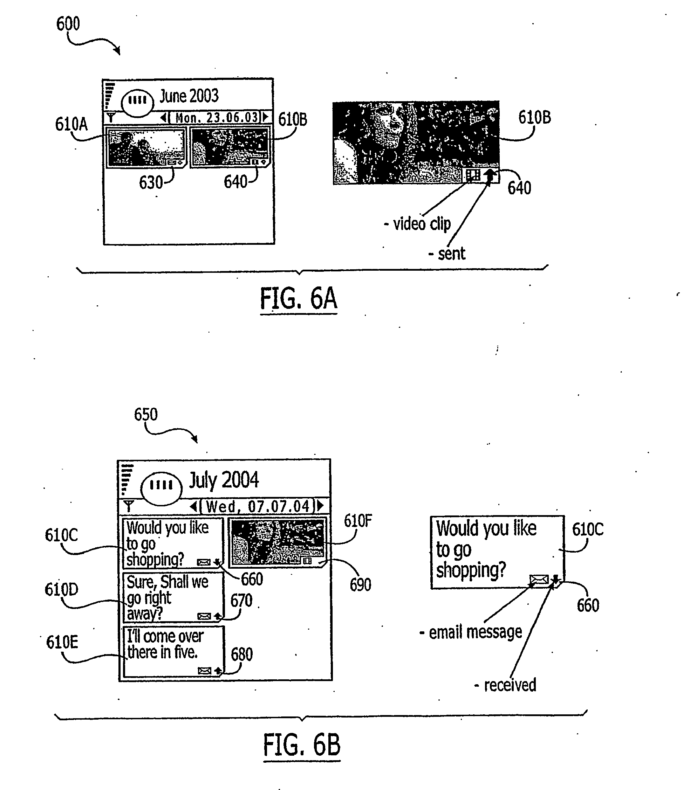

In the Figure 2 embodiment, media file representation **230B** is shown in a bold frame **320** to indicate a position of a cursor in the column **220**. The cursor may be in any direction, upwards, downwards, left or right, by using a joystick, arrow buttons or the like, to change the media file representation that is within the bold frame. The bold framed media file representation, otherwise referred to as the selected media file representation, may be activated to provide for a pop-up view (see Figure 3) or opened into a full screen format (see Figure 6B), e.g., by pressing the joystick or some other keyboard entry or touch screen, etc.

As shown in Figure 3, the selected media file representation may provide for a "pop-up" view **340** of the media file representation **230B**. The "pop-up" view allows for the scrolled and/or selected media file representation to pop-up and be viewed in a larger form than would otherwise be provided in the standard media view, as in Figures 1 and 2. Typically, a "pop-up" will be associated with the media file representations in the centerline column, i.e., the column with the largest media file representations. However, it is also possible to configure the media diary application such that any of the media file representations within the "cylindrical" media view or any other media view can be activated to provide for a "pop-up" view of the activated media file representation. The "pop-up" view will typically be presented by selecting a media file representation (e.g., moving a cursor over the representation) and providing mouse-type activation, joystick activation or keypad activation.

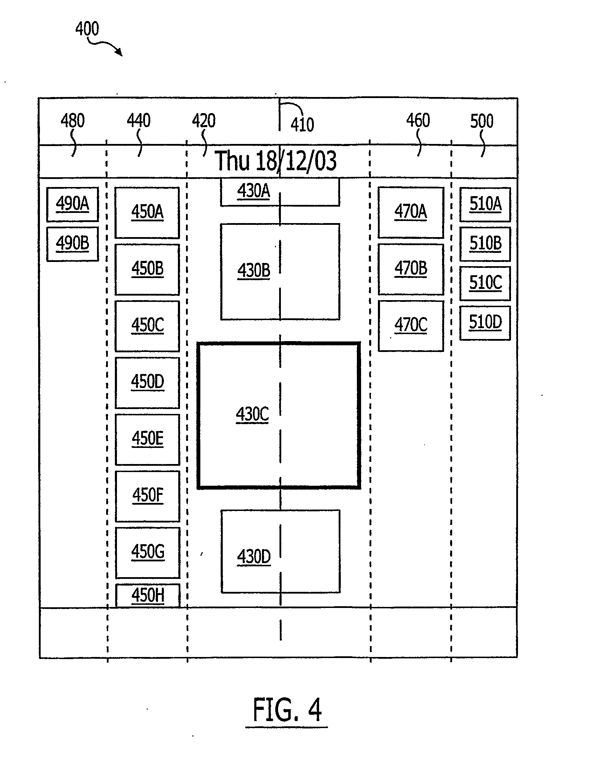

In accordance with another embodiment of the present invention, Figure 4 provides for a media view in which the media items are presented in "fish-eye" media view. The "fish-eye" media view **400** provides for the size of the media file representation to be determined by the distance from the centerline of the associated time period, time frame or event and the distance from the vertical center, also referred to as the center point, of the associated time period, time frame or event. The "fish-eye" view provides for an added dimension to the "cylindrical" media view of Figure 3. The term "fish-eye" media view is used to refer to the media view as if the media file representations were affixed to the surface of a fish eye.

For example, in the illustrated embodiment of Figure 4, the imaginary centerline **410** of the view corresponds with the column **420** that is associated with the date 18 December 2003. The "fish-eye" media view provides for the media file representations underlying this column to be sized larger than other media file representations that are associated with other columns. The media file representation will decrease in size the further the associated column is from the centerline position. In addition, the "fish-eye" view provides for the center-point media file representation within column **420** to be sized largest overall and for the media file representations within the center column **420** to decrease in size the further they are, upwardly or downwardly, from the center-point media file representation. In relation to Figure 4, media file representations **430A - 430D** are larger than the media file representations underlying columns **440, 460, 480** and 500. This means that media file representations **450A - 450H** and **470A - 470C** are reduced in size compared to the media file representations **430A** - **430D** and, further, media file representations **490A - 490B** and **510A** - **510D** are reduced in size further compared to media file representations **450A** - **450H** and **470A** - **470C**. In addition, within the center column **420**, media file representation **430C** overlies the vertical center-point within the column and, thus is the largest media file representation. The media file representations within column **420** that border media file representation **430C**, specifically media file representations **430B** and **430D**, are depicted as smaller than media file representation **430C**. Further, the media file representation **430A**, furthest from the center-point media file representation **430C**, is depicted as the smallest representation within the center column **420**.

It is noted that while the Figure 4 illustrated embodiment determines size of the media file representation in terms of the distance from the vertical centerline of the associated time period, time frame or event (i.e., a column in Figure 2) and the distance form the center point of that time period, it is also possible, and within the inventive concepts herein disclosed, to determine size of the media file representation in terms of the distance from any predefined position within the media view and the center point of the predefined position. Additionally, other displayed media file representations may vary in size according to the distance from the predefined position and the center point of the predefined position.

Typically, the media view of Figure **4** is dynamic in nature, such that a user of the media dairy is able to scroll the view horizontally (i.e., left to right or right to left) to bring a requisite column into the centerline position. In addition, the media view of Figure 4 is scrollable vertically (i.e. up and down) to bring a requisite media file representation within the center column into the center-point position. Thus, if the user of the media diary application scrolls the view to the right, column **440** would assume the centerline position and the underlying media file representations would be the largest in size within the view. Column **420** would move from the centerline position to a position adjacent to the center column **440** and the underlying media file representations would be smaller in size that those depicted under column **440**. If the user of the media diary application scrolls the view down, media file representation 4**30B** would occupy the center-point position within center column **420** and would be displayed as the largest media file representation within the overall view.

Similar to the description related to Figure 2, the Figure 4 "fish-eye" media view is conducive to providing a "pop-up" view, as depicted in Figure 3. The "pop-up" function will typically be associated with the center column media file representations, and, specifically, the center-point media file representation. However, the media diary application can be configured such that "pop-up" views can be associated with any of the representations in the "fish-eye" media view.

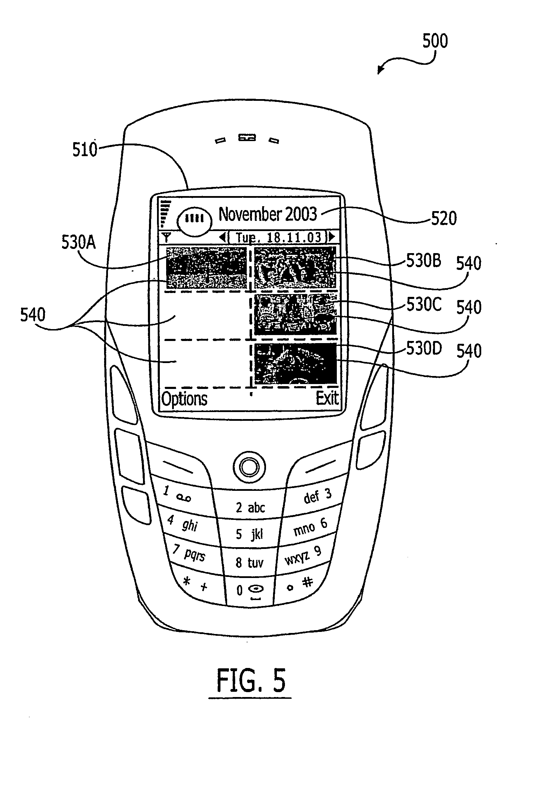

Figure 5 depicts a digital device **500**, such as a cellular telephone that executes a media file application, in accordance with an embodiment of the present invention. The display **510** of the digital device illustrates a media view **520** that graphically depicts media file representations **530A - 530D**. The media file representations are depicted within respective sub-areas **540** of the display. The media file management application of the present invention will configure the media view into generally equal sized sub-areas. In the illustrated embodiment the media view is configured so as to provide for six sub-areas, thus, six media file representations may be displayed. In alternate embodiments, the number of sub-areas within a display may vary. The number of sub-areas within the display may be fixed by the application, typically based on display size and display resolution, or it may change based on the number of media files that are currently associated with a time period, moment of time or event. Additionally, the application may be configured such that a user can choose the number and geometric configuration of the sub-areas within the display. Typically, the goal is to represent as many identifiable media file representations on the display as the size of the display warrants.

In the illustrated embodiment of Figure 5, the media view **510** displays one period of time, a date; 18 November 2003. The period of time within the media view may be adjusted by scrolling the timeline or by moving an optional time bar or time handle. As previously noted, the media file management application may be configured such that the display is divided into six sub-areas with three sub-areas per column. In the illustrated embodiment all of the sub-areas are related to the displayed time period. In alternate embodiments a time period may be associated with only one column. In such an embodiment the media view may display two time periods, with each time period associated with a displayed column. In devices that have wider displays the display may provide for the viewing of more than one time period and the time period may include more than two columns of sub-areas. If additional media files are associated with a time period, the media view may be vertically scrolled to provide for display of the additional media file representations associated with the media files.

In accordance with another embodiment of the present invention, the media file representations of the media view may include content and condition information, typically in the form of attribute icons displayed in conjunction with the media file representation. Figures 6A and 6B illustrate examples of media views that include media file representations having attribute icons superimposed on the image. This type of media view is also referred to herein as the presentation view. Figure 6A illustrates a media view **600** that includes media file representations **610A** and **610B**. Media file representation **610A** has icons **630** superimposed in the lower right hand corner and media file representation **610B** has icons **640** similarly superimposed. It is noted that positioning of the icons in Figure 6A is by way of example only. The attribute icons can be superimposed at any position over the media file representation. In the zoomed-in view of media file representation **610B**, attribute icons **640** are more clearly identifiable Each icon will correspond to any item of metadata information, such as content or condition information related to the media file. In the Figure 6A illustration, the film icon identifies the file type as being a video file and the up-arrow icon identifies the file as having been previously communicated from a media capture device.

Figure 6B illustrates media view **650** that includes media file representations **610C, 610D, 610E** and **610F**. Media file representation **610C** has icons **660** superimposed in the lower right hand corner and media file representations **610D**, **610E** and **610F** have icons **670, 680** and **690**, respectively; similarly superimposed. As mentioned above, the icons can be superimposed at any position over the media file representation. In the zoomed-in view of media file representation **610C**, attribute icons **660** are more clearly identifiable. In the Figure 6B illustration, the envelope icon identifies the file type as being an email message and down-arrow icon identifies the file as having been received. In both the presentation view and the detailed view the media diary application may provide for the user to move a cursor over the icon to display text information related to the icon, such as the definition of what the icon represents.

In addition to the icons depicted in Figures 6A and 6B other icons or means of identifying metadata related to the media file may also be superimposed on the media file representation. Examples of other icons include file type icons, such as image file, video file, email message, Short Message Service (SMS) message, Multimedia Message Service (MMS) message, game application, audio file, text file, annotation, note, bookmark, ringing tone, skin of user interface, display icon and the like. Additionally, other icons may represent the nature of the content of the media file, such as personal file, shared file, secret file, etc. Still other icons may represent the condition of the file, such as file sent, file received, file opened, file not yet opened, file synchronized, file not synchronized, file archived, or file not archived. In one embodiment of the invention, the user of the media diary application may choose which attribute icons they wish to superimpose on the media file representations in their media diary. Alternatively, the media file management application may automatically determine the icons that are superimposed. The media file representations may have one or more manually and/or automatically determined icons.

Additionally, expansion of the media file representation to a full view may include expansion of the information underlying the icons. For example, in the media file representations in the media view the content and condition information is typically limited to being displayed as icons. However, in a full view the displayed representation may include actual text information that identifies all or any portion of the content and/or condition information.

The invention is also embodied in applications, methods and digital devices for creating detailed views of media files that form the basis for the media file representation. The detailed views are typically zoomed-in or cropped views of the actual media file or an image within the actual media file. Alternatively, the detailed view may be a zoomed-out portion of the actual media file or an image within the actual media file. Additionally, if the media file is a text file, the detailed view will display some portion, typically the beginning portion, of the text file. By providing for media file representations that include the detailed view, the contents of the media file are more identifiable. This is especially true, if the media file management application is executed on a mobile device that, characteristically, has a display screen with limited display capability. In this situation, if the media file representation is formed from the actual media file, i.e., the entire image or text file, also referred to as a thumbnail image, the media file representation would typically not be identifiable to the user, in terms of the content of the media file, especially if the display is broken into a plurality of sub-areas.

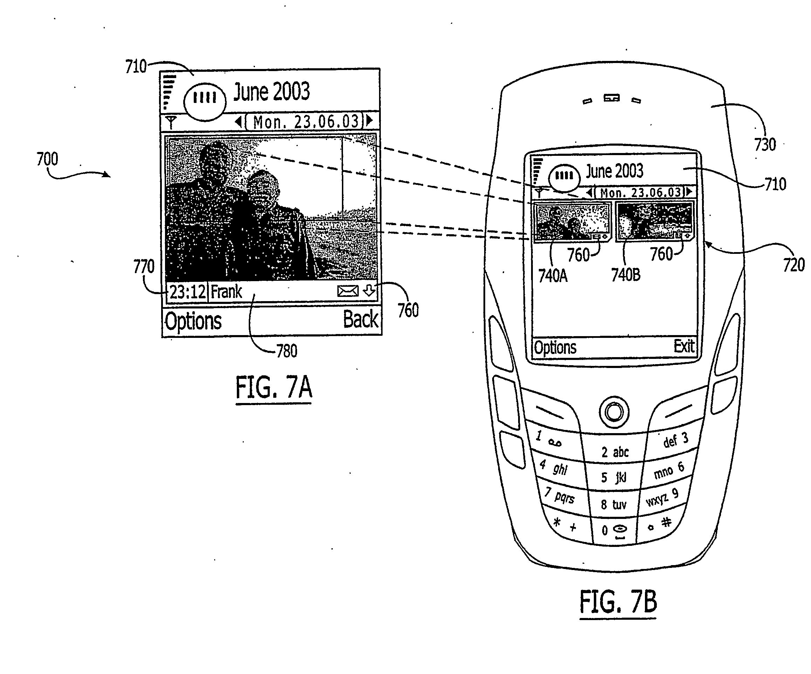

Figure 7A illustrates a full-sized media file **700**, which in the illustrated embodiment is an image file, displayed with the media view **710** of a media file management application. Figure 7B depicts the display **720** of a digital device**730**, such as a cellular telephone, in which the display displays a media view **710** including media file representations that are in the form of detailed views **740A** and **740B**. The present invention provides for a media file management application that is capable of forming detailed views from full-sized or actual views of the media view. In the **7B** illustration the detailed view **740A** is a zoomed-in or cropped portion of the actual image **700**. The detailed image may be zoomed-in or zoomed-out in relation to the center point of an image file or, as shown in Figure 6B, cropped from a point of interest, so as to include an identifiable image. The detailed view may also include attribute icons **760** superimposed on the detailed image, in accordance with an embodiment of the present invention.

The detailed view **740A** may be selected, by appropriate mouse and cursor function, joystick and cursor function, keypad activation or the like, to trigger the display of the full-sized or actual media file view **700** of Figure 6A. The full-sized media view provides for the attribute icons **760** to be displayed in conjunction with the media file and for additional non-iconed metadata information to be displayed, such as a timestamp **770** and media file title **780**. The title and timestamp are shown by way of example. Other metadata type attribute data may also be displayed in conjunction with the full-sized or actual media file view.

In addition to image files, a detailed view may be formed from a text file, such as an email message, SMS message, MMS message or the like. In such embodiments, the detailed view will typically include a string of text, typically the string of text at the beginning portion of the message/text file, see for example media file representations **610C**, **620D** and **630E** of Figure 6B. The user of the media file management application may select the detailed view of the text file in order to be presented with the text file in its entirety.

A further embodiment of the invention is defined by a digital device that implements the media diary, in accordance with an embodiment of the present invention. Figure 7 illustrates a block diagram of digital device **800** that implements the media diary. As previously noted, the digital device will typically be a digital device capable of digital communication with other digital devices, such as a mobile terminal including for example, a mobile telephone, a PDA, laptop computer or the like. However, the digital device may be any other device capable of displaying the media diary of the present invention such as a digital camera, digital video recorder, digital audio recorder or the like.

The digital device **800** will include a processing unit **810**, such as a processor, an application specific integrated circuit, analog and/or digital circuitry, or any other similar device that executes computer-readable program instructions for accessing media files. Wherein the program instructions and the media files are generally stored in memory device **820**. The computer-readable program instructions may include first instructions **830** for generating a media view that provides access to digital media files and associates the digital media files with a period of time, and second instructions **840** for generating media file representations within the media view such that the media file representations associated with a period of time proximate to a vertical centerline of the media view are the largest sized media file representations in the display. Alternatively, the first instructions **830** may provide for generating a media view that provides access to at least one digital media file through media file representations, and the second instructions **840** may provide for generating an attribute icon that is superimposed on the media file representation. Additionally, the first instructions **830** may provide generating a media view that provides access to digital media files through media file representations and associates the media file representations with a period of time and the second instructions **840** may provide for selecting a media file representation for display of a detailed view of the media file associated with the media file representation.

In addition, the digital device will include, or may be in external communication with, a display **850** that is in communication with the processing unit and provides a presentation mechanism for the media view.

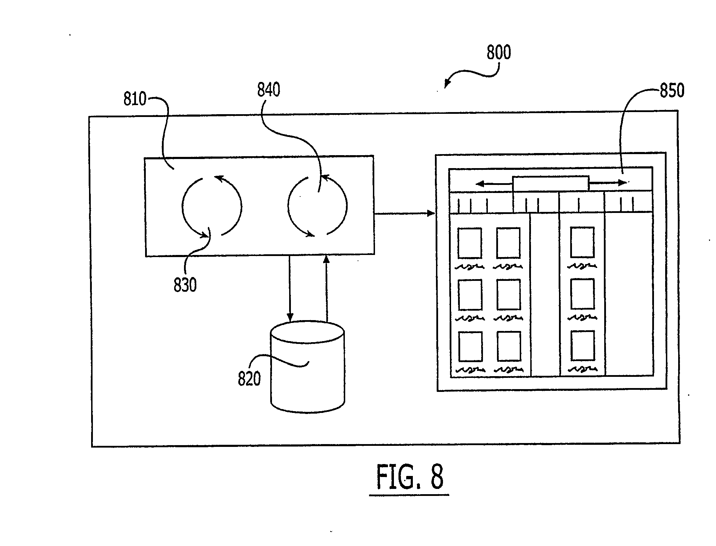

In this regard, Figures 1 - 8 provide for methods, systems and program products according to the invention. It will be understood that the above-described functionality, can be implemented by computer program instructions. These computer program instructions may be loaded onto a computer or other programmable apparatus to produce a machine, such that the instructions that execute on the computer or other programmable apparatus create means for implementing the functions specified in the block(s). These computer program instructions may also be stored in a computer-readable memory that can direct a computer or other programmable apparatus to function in a particular manner, such that the instructions stored in the computer-readable memory produce an article of manufacture including instruction means which implement the function specified in the block(s). The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the blocks.

Accordingly, the foregoing disclosure supports combinations of means for performing the specified functions, combinations of steps for performing the specified functions and program instruction means for performing the specified functions. It will also be understood that the above-described functionality, can be implemented by special purpose hardware-based computer systems that perform the specified functions or steps, or combinations of special purpose hardware and computer instructions.

The described embodiments of the present invention provide for a media file management application for a digital device that will incorporate both a daily planner and storage of media files according to an associated moment or period of time, such as a date. The media file management application may also incorporate a presentation application. The media file management application may also additionally incorporate an email application or any other messaging application. The media file management application is capable of automatically entering received media files into the application and automatically associating the media file with a specific moment or period of time, such as a date or event. The invention provides efficiency to the user, in that, the media view and the timeline view combine to provide an application that is highly searchable for the purpose of making the media files readily accessed by the user. In addition, the media file management application provides the capability to easily further disseminate the media files to other digital communication devices. In addition, the media file management application provides the capability to easily represent the media files to the user.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A computer program comprising instructions that when executed cause a digital device (800) to:
generate a media view (, 400) on a display, the media view providing access to digital media files via media file representations presented in the media view according to a timeline, each media file representation being displayed in relation to a period of time associated with the corresponding digital media file;
permit scrolling of the timeline to allow for media file representations of media files associated with different time periods to be moved in and out of a display area of the display, the scrolling of the timeline causing media file representations to scroll across a predefined line in the media view;
cause each of the media file representations (430A-430D) proximate the predefined line within the media view to be enlarged compared to each of the media file representations (450A-450H, 470A-470C, 490A-490B, 510A-510D) not proximate the predefined line, wherein the media file representations decrease in size the further that an associated period of time of a corresponding digital media file deviate from a period of time associated with the predefined line, and whereby scrolling of the timeline changes the sizes of the displayed media file representations depending on the distance of each displayed media file representation from the predefined line,
permit scrolling in a direction along the predefined line within the media view; and
cause a media file representation (430C) proximate a point of the predefined line to be enlarged compared to other media file representations (430A, 430B, 430D) proximate the predefined line, wherein the media file representations (430A, 430B, 430D) proximate to the line (410) decrease in size the further that the media file representations deviate from said point of the predefined line.

2. A computer program according to claim 1 or 2, further arranged, when executed, for displaying a selected media file representation (230B) from the media view (200) in "pop-up" view format (340).

3. A computer program according to claim 2, wherein displaying a selected media file representation (230B) comprises displaying a selected media file representation from the media view in "pop-up" view format (340), wherein the "pop-up" view format exceeds the size of all other media file representations within the media view or wherein the selected media file representation is chosen from the media file representations proximate to the predefined position.

4. A computer program according to any preceding claim, wherein the predefined line is a vertical line of the display area.

5. A computer program according to any one of the preceding claims, wherein the predefined line is a vertical centerline (210, 410) of the display area.

6. A computer program according to any one of the preceding claims, wherein the point is a center point with respect to the display area of the predefined line.

7. A computer program according to claim 1, wherein the computer program is further arranged, when executed, for
generating an attribute icon (630, 640) that is superimposed on at least one of the media file representations (G10A, G10B).

8. A computer program according to claim 7, wherein generating an attribute icon (630, 640) further comprises:
generating an attribute icon that is superimposed on at least one of the media file representations (G10A, G10B), wherein the attribute icon represents metadata information associated with the media file that is represented or
generating an attribute that is superimposed on at least one of the media file representations, wherein the attribute icon represents metadata information associated with the media file that is represented and the metadata information is chosen from the group consisting of type of media file, communication status of the media file, content of the media file, timestamp of the media file and access status of the media file.

9. A method for digital media management in a digital device (800), the method comprising:
receiving a digital media file having metadata associated with the digital media file;
transmitting the file to a media diary computer program that associates the digital media file with a period in time based on the metadata; and
providing a user access to the digital media file via a media view (400) on a display, the media view displaying media file representations of digital media files according to a timeline and a media file representation corresponding to the received digital media file being displayed in the media view in relation to the period of time associated with the digital media file,
permitting scrolling of the timeline to allow media file representations of media files associated with different time periods to be moved in and out of a display area of the display, the scrolling of the timeline causing media file representations to scroll across a predefined line in the media view,
causing each of the media file representations (430A-430D) proximate the predefined line within the media view to be enlarged compared to each of the media file representations (450A-450H, 470A-470C, 490A-490B, 510A-510D) not proximate the predefined line, wherein the media file representations decrease in size the further that the associated periods of time of the corresponding digital media files deviate from a period of time associated with the predefined line, and whereby scrolling of the timeline changes the sizes of the displayed media file representations according to the proximity of the displayed media file representations from the predefined line in the media view,
permitting scrolling in a direction along the predefined line within the media view; and
causing a media file representation (430C) proximate a point of the predefined line to be enlarged compared to other media file representations (430A, 430B, 430D) proximate the predefined line, wherein the media file representations (430A, 430B, 430D) proximate to the predefined line (410) decrease in size the further that the media file representations deviate from said point of the predefined line.

10. A method according to claim 9, further comprising providing a user selectable access to the media file representation such that selecting the media file representation (230B) results in the display of a "pop-up" view.

11. A method according to claim 10 or 11, wherein the line (410) is a vertical centerline of the display area of the device and wherein the predefined point is the center point of the vertical centre line in the display area.

12. Apparatus (800) comprising:
means for generating a media view (400) on a display (850) of the apparatus, the media view providing access to at least two digital media files via media file representations presented in the media view according to a timeline, each media file representation being displayed in relation to a period of time associated with the corresponding media file,
means for scrolling the timeline to allow for media file representations of media files associated with different time periods to be moved in and out of a display area of the display, the scrolling of the timeline causing media file representations to scroll across a predefined line in the media view;
means for causing each of the media file representations (430A-430D) proximate to a predefined line of the media view to be enlarged compared to each of the media file representations (450A-450H, 470A-470C, 490A-490B, 510A-510D) not proximate the predefined line, wherein the media file representations gradually decrease in size the further that an associated period of time of a corresponding digital media file deviates from a period of time associated with the predefined line, and whereby scrolling of the timelines changes the sizes of the displayed media file representations depending on the distance of each displayed media file representation from the predefined line;
means for scrolling in a direction along the predefined line within the media view; and
means for causing a media file representation (430C) proximate a point of the predefined line to be enlarged compared to other media file representations (430A, 430B, 430D) proximate the predefined line, wherein the media file representations (430A, 430B, 430D) proximate to the predefined line (410) decrease in size the further that the media file representations deviate from said point of the predefined line.

13. A digital device (800) comprising the apparatus according to claim 12 and a display (850) operable to present the media view (200,400).

14. A digital device (800) according to claim 12 or 13, further comprising means for displaying a selected media file representation (230B) from the media view in a "pop- up" view format (340).

## Patentansprüche

1. Computerprogramm, das Befehle umfasst, die bei Ausführung ein digitales Gerät (800) zu folgendem veranlassen:
Erzeugen einer Medienansicht (400) auf einer Anzeige, wobei die Medienansicht Zugriff auf digitale Mediendateien über Mediendateidarstellungen bereitstellt, die in der Medienansicht gemäß einer Zeitleiste gezeigt werden, wobei jede Mediendateidarstellung in Relation zu einer Zeitspanne, die der entsprechenden digitalen Mediendatei zugeordnet ist, angezeigt wird;
Ermöglichen von Scrollen der Zeitleiste, um Mediendateidarstellungen von Mediendateien, die unterschiedlichen Zeitspannen zugeordnet sind, zu erlauben, dass sie in einen Anzeigebereich der Anzeige hinein- und herausbewegt werden, wobei das Scrollen der Zeitleiste die Mediendateidarstellungen dazu veranlasst, entlang einer vorgegebenen Linie in der Medienansicht zu scrollen;
Veranlassen von jeder der Mediendateidarstellungen (430A-430D) unmittelbar bei der vorgegebenen Linie innerhalb der Medienansicht, im Vergleich zu jeder der Mediendateidarstellungen (450A-450H, 470A-470C, 490A-490B, 510A-510D), die nicht unmittelbar an der vorgegebenen Linie sind, erweitert zu werden, wobei die Mediendateidarstellungen sich um so weiter in der Größe verringern, je weiter eine zugeordnete Zeitspanne einer entsprechenden digitalen Mediendatei von einer der vorbestimmten Linie zugeordneten Zeitspanne abweicht, und wobei das Scrollen der Zeitleiste die Größen der angezeigten Mediendateidarstellungen in Abhängigkeit von dem Abstand von jeder angezeigten Mediendateidarstellung zu der vorgegebenen Linie verändert,
Ermöglichen von Scrollen in einer Richtung entlang der vorgegebenen Linie innerhalb der Medienansicht; und
Veranlassen einer unmittelbar an einem Punkt der vorgegebenen Linie gelegenen Mediendateidarstellung (430C), sich im Vergleich zu anderen Mediendateidarstellungen (430A, 430B, 430D) unmittelar an der vorgegebene Linie zu vergrößern, wobei die Mediendateidarstellungen (430A, 430B, 430D) unmittelbar an der Linie (410) sich in der Größe um so weiter verkleinern, je weiter die Mediendateidarstellungen von den Punkt der vorgegebenen Linie abweichen.

2. Computerprogramm gemäß Anspruch 1 oder 2, das weiterhin dazu eingerichtet ist, wenn es ausgeführt wird, eine ausgewählte Mediendarstellung (230B) der Medienansicht (200) im "pop-up"-Ansichtsformat (340) anzuzeigen.

3. Computerprogramm gemäß Anspruch 2, wobei das Anzeigen einer ausgewählten Mediendateidarstellung (230B) die Anzeige einer ausgewählten Mediendateidarstellung der Medienansicht (200) im "pop-up"-Ansichtsformat (340) umfasst, wobei das "pop-up"-Ansichtsformat die Größe aller anderen Mediendateidarstellungen in der Medienansicht überschreitet, oder wobei die ausgewählte Mediendateidarstellung aus den Mediendateidarstellungen unmittelbar bei der vorgegebenen Position ausgewählt wird.

4. Computerprogramm gemäß einem der vorangehenden Ansprüche, wobei die vorgegebene Linie eine vertikale Linie des Anzeigebereichs ist.

5. Computerprogramm gemäß einem der vorangehenden Ansprüche, wobei die vorgegebene Linie eine vertikale Zentrallinie (210, 410) des Anzeigebereichs ist.

6. Computerprogramm gemäß einem der vorangehenden Ansprüche, wobei der Punkt ein Zentralpunkt in Bezug auf den Anzeigebereich der vorgegebenen Linie ist.

7. Computerprogramm gemäß Anspruch 1, wobei das Computerprogramm weiterhin dazu eingerichtet ist, wenn es ausgeführt wird, um
ein Eigenschaftsicon (630, 640), das wenigstens einer der Mediendateidarstellungen (610A, 610B) überlagert ist, zu erzeugen.

8. Computerprogramm gemäß Anspruch 7, wobei das Erzeugen eines Eigenschaftsicons (630, 640) weiter umfasst:
Erzeugen eines Eigenschaftsicons, das wenigstens einer der Mediendateidarstellungen (610A, 610B) überlagert ist, wobei das Eigenschaftsicon Metadateninformation darstellt, die der dargestellten Mediendatei zugeordnet ist, oder
Erzeugen einer Eigenschaft, die wenigstens einer der Mediendateidarstellungen überlagert ist, wobei das Eigenschaftsicon Metadateninformation darstellt, die der dargestellten Mediendatei zugeordnet ist, und die Metadateninformation aus der Gruppe bestehend aus dem Typ der Mediendatei, Kommunikationsstatus der Mediendatei, Inhalt der Mediendatei, Zeitstempel der Mediendatei und Zugriffsstatus der Mediendatei ausgewählt ist.

9. Verfahren für ein Management digitaler Daten in einem digitalen Gerät (800), umfassend:
Empfangen einer digitalen Mediendatei, die der digitalen Mediendatei zugeordnete Metadaten hat;
Senden der Datei an ein Medienkalendercomputerprogramm, das der digitalen Mediendatei eine Zeitspanne basierend auf den Metadaten zuordnet; und
Bereitstellen eines Benutzerzugriffs auf die digitale Mediendatei über eine Dateiansicht (400), in einer Anzeige, wobei die Medienansicht Mediendateidarstellungen von digitalen Mediendateien gemäß einer Zeitleiste anzeigt, und in der Medienansicht eine Mediendateidarstellung entsprechend der empfangenen digitalen Mediendatei in Relation zur der digitalen Mediendatei zugeordneten Zeitspanne angezeigt wird;
Ermöglichen von Scrollen der Zeitleiste, um Mediendateidarstellungen von Mediendateien, die unterschiedlichen Zeitspannen zugeordnet sind, zu erlauben, dass sie in einen Anzeigebereich der Anzeige hinein- und herausbewegt werden, wobei das Scrollen der Zeitleiste die Mediendateidarstellungen dazu veranlasst, entlang einer vorgegebenen Linie in der Medienansicht zu scrollen;
Veranlassen von jeder der Mediendateidarstellungen (430A-430D) unmittelbar an der vorgegebenen Linie innerhalb der Medienansicht, im Vergleich zu jeder der Mediendateidarstellungen (450A-450H, 470A-470C, 490A-490B, 510A-510D), die nicht unmittelbar an der vorgegebenen Linie sind, erweitert zu werden, wobei die Mediendateidarstellungen sich um so weiter in der Größe verringern, je weiter die zugeordneten Zeitspannen der entsprechenden digitalen Mediendateien von einer der vorbestimmten Linie zugeordneten Zeitspanne abweichen, und wobei das Scrollen der Zeitleiste die Größen der angezeigten Mediendateidarstellungen gemäß der Nähe der angezeigten Mediendateidarstellungen zu der vorgegebenen Linie in der Medienansicht verändert,
Ermöglichen von Scrollen in einer Richtung entlang der vorgegebenen Linie innerhalb der Medienansicht; und
Veranlassen einer unmittelbar an einem Punkt der vorgegebenen Linie gelegenen Mediendateidarstellung (430C), sich im Vergleich zu anderen Mediendateidarstellungen (430A, 430B, 430D) unmittelbar an der vorgegebenen Linie zu vergrößern, wobei die Mediendateidarstellungen (430A, 430B, 430D) unmittelbar an der Linie (410) sich in der Größe um so weiter verkleinern, je weiter die Mediendateidarstellungen von den Punkt der vorgegebenen Linie abweichen.

10. Verfahren gemäß Anspruch 9, weiterhin umfassend einen durch den Benutzer auswählbaren Zugang zu der Mediendateidarstellung, derart dass die Auswahl der Mediendateidarstellung (230B) in der Anzeige eines "pop-up"-Ansichtsformats resultiert.

11. Verfahren gemäß Anspruch 10 oder 11, wobei die Linie (410) eine vertikale Zentrallinie des Anzeigebereichs des Geräts ist und wobei der vorgegebene Punkt der Zentralpunkt der vertikalen Zentrallinie in dem Anzeigebereich ist.

12. Vorrichtung (800), umfassend:
Mittel zum Erzeugen einer Medienansicht (400) auf einer Anzeige (850) der Vorrichtung, wobei die Medienansicht Zugriff auf mindestens zwei digitale Mediendateien über Mediendateidarstellungen bereitstellt, die in der Medienansicht gemäß einer Zeitleiste gezeigt werden, wobei jede Mediendateidarstellung in Relation zu einer Zeitspanne, die der entsprechenden digitalen Mediendatei zugeordnet ist, angezeigt wird;
Mittel zum Scrollen der Zeitleiste, um Mediendateidarstellungen von Mediendateien, die unterschiedlichen Zeitspannen zugeordnet sind, zu erlauben, dass sie in einen Anzeigebereich der Anzeige hinein- und herausbewegt werden, wobei das Scrollen der Zeitleiste die Mediendateidarstellungen dazu veranlasst, entlang einer vorgegebenen Linie in der Medienansicht zu scrollen;
Mittel zum Veranlassen von jeder der Mediendateidarstellungen (430A-430D) unmittelbar bei einer vorgegebenen Linie der Medienansicht, im Vergleich zu jeder der Mediendateidarstellungen (450A-450H, 470A-470C, 490A-490B, 510A-510D), die nicht unmittelbar an der vorgegebenen Linie sind, erweitert zu werden, wobei die Mediendateidarstellungen sich graduell um so weiter in der Größe verringern, je weiter eine zugeordnete Zeitspanne einer entsprechenden digitalen Mediendatei von einer der vorbestimmten Linie zugeordneten Zeitspanne abweicht, und wobei das Scrollen der Zeitleiste die Größen der angezeigten Mediendateidarstellungen in Abhängigkeit von dem Abstand von jeder angezeigten Mediendateidarstellung zu der vorgegebenen Linie verändert;
Mittel zum Scrollen in einer Richtung entlang der vorgegebenen Linie innerhalb der Medienansicht; und
Mittel zum Veranlassen einer unmittelbar an einem Punkt der vorgegebenen Linie gelegenen Mediendateidarstellung (430C), sich im Vergleich zu anderen Mediendateidarstellungen (430A, 430B, 430D) unmittelbar an der vorbestimmten Linie zu vergrößern, wobei die Mediendateidarstellungen (430A, 430B, 430D) unmittelbar an der vorbestimmten Linie (410) sich in der Größe um so weiter verkleinern, je weiter die Mediendateidarstellungen von den Punkt der vorgegebenen Linie abweichen.

13. Digitales Gerät (800), umfassend die Vorrichtung gemäß Anspruch 12 und eine Anzeige (850), die in der Lage ist, die Medienansicht (200, 400) zu zeigen.

14. Digitales Gerät (800) gemäß Anspruch 12 oder 13, weiterhin umfassend Mittel zum Anzeigen einer ausgewählten Mediendateidarstellung (230B) der Medienansicht in einem "pop-up"-Ansichtsformat.

## Revendications

1. Programme informatique comprenant des instructions lesquelles, lorsqu'elles sont exécutées, amènent un dispositif numérique (800) à :
générer un affichage multimédia (400) sur un écran d'affichage, l'affichage multimédia donnant accès à des fichiers multimédias numériques via des représentations de fichiers multimédias présentées dans l'affichage multimédia selon une ligne de temps, chaque représentation de fichiers multimédias étant affichée en relation avec une période de temps associée au fichier multimédia numérique correspondant ;
permettre le défilement de la ligne de temps afin de permettre à des représentations de fichiers multimédias de fichiers multimédias associés à des périodes de temps différentes d'être déplacées dans et hors d'une zone d'affichage de l'écran d'affichage, le défilement de la ligne de temps amenant des représentations de fichiers multimédias à défiler à travers une ligne prédéfinie dans l'affichage multimédia ;
amener chacune des représentations de fichiers multimédias (430A - 430D) à proximité de la ligne prédéfinie dans l'affichage multimédia à être agrandie par rapport à chacune des représentations de fichiers multimédias (450A - 450H, 470A - 470C, 490A - 490B, 510A - 510D) non situées à proximité de la ligne prédéfinie, dans lesquelles la taille des représentations de fichiers multimédias diminue à mesure qu'une période de temps associée d'un fichier multimédia numérique correspondant s'écarte d'une période de temps associée à la ligne prédéfinie, et moyennant quoi le défilement de la ligne de temps modifie les tailles des représentations de fichiers multimédias affichées en fonction de la distance entre chaque représentation de fichiers multimédias affichée et la ligne prédéfinie ;
permettre un défilement dans une direction le long de la ligne prédéfinie dans l'affichage multimédia ; et
amener une représentation de fichiers multimédias (430C) à proximité d'un point de la ligne prédéfinie à être agrandie par rapport à d'autres représentations de fichiers multimédias (430A, 430B, 430D) à proximité de la ligne prédéfinie, dans lesquelles la taille des représentations de fichiers multimédias (430A, 430B, 430D) à proximité de la ligne (410) diminue à mesure que les représentations de fichiers multimédias s'écartent dudit point de la ligne prédéfinie.

2. Programme informatique selon la revendication 1 ou 2, en outre agencé, lorsqu'il est exécuté, de manière à afficher une représentation de fichiers multimédias sélectionnée (230B) à partir de l'affichage multimédia (200), dans un format d'affichage contextuel «pop-up» (340).

3. Programme informatique selon la revendication 2, dans lequel l'étape consistant à afficher une représentation de fichiers multimédias sélectionnée (230B) consiste à afficher une représentation de fichiers multimédias sélectionnée à partir de l'affichage multimédia dans un format d'affichage contextuel «pop-up» (340), dans lequel le format d'affichage contextuel « pop-up » dépasse la taille de toutes les autres représentations de fichiers multimédias au sein de l'affichage multimédia, ou dans lequel la représentation de fichiers multimédias sélectionnée est choisie parmi les représentations de fichiers multimédias à proximité de la position prédéfinie.

4. Programme informatique selon l'une quelconque des revendications précédentes, dans lequel la ligne prédéfinie est une ligne verticale de la zone d'affichage.

5. Programme informatique selon l'une quelconque des revendications précédentes, dans lequel la ligne prédéfinie est un axe de symétrie vertical (210, 410) de la zone d'affichage.

6. Programme informatique selon l'une quelconque des revendications précédentes, dans lequel le point est un point central en relation avec la zone d'affichage de la ligne prédéfinie.

7. Programme informatique selon la revendication 1, dans lequel le programme informatique est en outre agencé, lorsqu'il est exécuté, de manière à :
générer une icône d'attribut (630, 640) qui est superposée sur au moins l'une des représentations de fichiers multimédias (610A, 610B).

8. Programme informatique selon la revendication 7, dans lequel l'étape consistant à générer une icône d'attribut (630, 640) comprend en outre les étapes ci-dessous consistant à :
générer une icône d'attribut qui est superposée sur au moins l'une des représentations de fichiers multimédias (610A, 610B), dans lequel l'icône d'attribut représente des informations de métadonnées associées au fichier multimédia qui est représenté ; ou
générer une icône d'attribut qui est superposée sur au moins l'une des représentations de fichiers multimédias, dans lequel l'icône d'attribut représente des informations de métadonnées associées au fichier multimédia qui est représenté, et les informations de métadonnées sont choisies dans le groupe comportant le type de fichier multimédia, l'état de communication du fichier multimédia, le contenu du fichier multimédia, l'estampille temporelle du fichier multimédia et l'état d'accès du fichier multimédia.

9. Procédé de gestion multimédia numérique dans un dispositif numérique (800), le procédé comprenant les étapes ci-dessous consistant à :
recevoir un fichier multimédia numérique présentant des métadonnées associées au fichier multimédia numérique ;
transmettre le fichier à un programme informatique de journal multimédia qui associe le fichier multimédia numérique à une période de temps sur la base des métadonnées ; et
fournir un accès utilisateur au fichier multimédia numérique via un affichage multimédia (400) sur un écran d'affichage, l'affichage multimédia affichant des représentations de fichiers multimédias de fichiers multimédias numériques selon une ligne de temps, et une représentation de fichiers multimédias correspondant au fichier multimédia numérique reçu laquelle est affichée dans l'affichage multimédia en relation avec la période de temps associée au fichier multimédia numérique ;
permettre le défilement de la ligne de temps afin de permettre à des représentations de fichiers multimédias des fichiers multimédias associés à des périodes de temps différentes d'être déplacées dans et hors d'une zone d'affichage de l'écran d'affichage, le défilement de la ligne de temps amenant des représentations de fichiers multimédias à défiler à travers une ligne prédéfinie dans l'affichage multimédia ;
amener chacune des représentations de fichiers multimédias (430A - 430D) à proximité de la ligne prédéfinie dans l'affichage multimédia à être agrandie par rapport à chacune des représentations de fichiers multimédias (450A - 450H, 470A - 470C, 490A - 490B, 510A - 510D) non situées à proximité de la ligne prédéfinie, dans lesquelles la taille des représentations de fichiers multimédias diminue à mesure que les périodes de temps associées du fichier multimédia numérique correspondant s'écartent d'une période de temps associée à la ligne prédéfinie, et moyennant quoi le défilement de la ligne de temps modifie les tailles des représentations de fichiers multimédias affichées en fonction de la proximité entre les représentations de fichiers multimédias affichées et la ligne prédéfinie dans l'affichage multimédia ;
permettre un défilement dans une direction le long de la ligne prédéfinie dans l'affichage multimédia ; et
amener une représentation de fichiers multimédias (430C) à proximité d'un point de la ligne prédéfinie à être agrandie par rapport à d'autres représentations de fichiers multimédias (430A, 430B, 430D) à proximité de la ligne prédéfinie, dans laquelle la taille des représentations de fichiers multimédias (430A, 430B, 430D) à proximité de la ligne prédéfinie (410) diminue à mesure que les représentations de fichiers multimédias s'écartent dudit point de la ligne prédéfinie.

10. Procédé selon la revendication 9, comprenant en outre l'étape consistant à fournir un accès sélectionnable par l'utilisateur à la représentation de fichiers multimédias de sorte que la sélection de la représentation de fichiers multimédias (230B) entraîne l'affichage d'un affichage contextuel «pop-up».

11. Procédé selon la revendication 10 ou 11, dans lequel la ligne (410) est un axe de symétrie vertical de la zone d'affichage du dispositif, et dans lequel le point prédéfini est le point central de l'axe de symétrie vertical dans la zone d'affichage.

12. Dispositif (800) comprenant :
un moyen pour générer un affichage multimédia (400) sur un écran d'affichage (850) du dispositif, l'affichage multimédia donnant accès à au moins deux fichiers multimédias numériques via des représentations de fichiers multimédias présentées dans l'affichage multimédia selon une ligne de temps, chaque représentation de fichiers multimédias étant affichée en relation avec une période de temps associée au fichier multimédia correspondant ;
un moyen pour faire défiler la ligne de temps en vue de permettre à des représentations de fichiers multimédias de fichiers multimédias associés à des périodes de temps différentes d'être déplacées dans et hors d'une zone d'affichage de l'écran d'affichage, le défilement de la ligne de temps amenant des représentations de fichiers multimédias à défiler à travers une ligne prédéfinie dans l'affichage multimédia ;
un moyen pour amener chacune des représentations de fichiers multimédias (430A - 430D) à proximité de la ligne prédéfinie de l'affichage multimédia à être agrandie par rapport à chacune des représentations de fichiers multimédias (450A - 450H, 470A - 470C, 490A - 490B, 510A - 510D) non situées à proximité de la ligne prédéfinie, dans laquelle la taille des représentations de fichiers multimédias diminue graduellement à mesure qu'une période de temps associée d'un fichier multimédia numérique correspondant s'écarte d'une période de temps associée à la ligne prédéfinie, et moyennant quoi le défilement des lignes de temps modifie les tailles des représentations de fichiers multimédias affichées en fonction de la distance entre chaque représentation de fichiers multimédias affichée et la ligne prédéfinie ;
permettre un défilement dans une direction le long de la ligne prédéfinie dans l'affichage multimédia ; et
amener une représentation de fichiers multimédias (430C) à proximité d'un point de la ligne prédéfinie à être agrandie par rapport à d'autres représentations de fichiers multimédias (430A, 430B, 430D) à proximité de la ligne prédéfinie, dans laquelle la taille des représentations de fichiers multimédias (430A, 430B, 430D) à proximité de la ligne prédéfinie (410) diminue à mesure que les représentations de fichiers multimédias s'écartent dudit point de la ligne prédéfinie.

13. Dispositif numérique (800) comprenant le dispositif selon la revendication 12 et un écran d'affichage (850) exploitable de manière à présenter l'affichage multimédia (200, 400).

14. Dispositif numérique (800) selon la revendication 12 ou 13, comprenant en outre un moyen pour afficher une représentation de fichiers multimédias sélectionnée (230B), à partir de l'affichage multimédia dans un format d'affichage contextuel «pop-up» (340).
